# EUROPEAN PATENT SPECIFICATION

(11) **EP 0 669 290 B1**
(45) Date of publication and mention of the grant of the patent: **02.05.1997**
(21) Application number: 95101730.0
(22) Date of filing: 09.02.1995
(51) Int. Cl.: C03C 4/08, C03C 4/02, C03C 3/091, C03C 3/089

(54) **Ultraviolet absorbing, fixed tint green or brown sunglass**
Ultraviolet absorbierendes grünes oder braunes Sonnenbrillenglas mit einer festen Farbe
Verre vert ou brun par lunette de soleil absorbant les rayons ultraviolets et ayant une teinte fixe

(30) Priority: 28.02.1994 US 202774; 28.02.1994 US 202777
(43) Date of publication of application: 30.08.1995
(73) Proprietor: CORNING INCORPORATED, Corning, N.Y. 14831 (US)
(72) Inventor: Kerko, David Joseph, Corning Incorporated, Corning, NY 14831 (US); Morgan, Daivd William, Corning Incorporated, Corning, NY 14831 (US); Lozano, Wagner Rodrigues, Corning Incorporated, Corning, NY 14831 (US)
(74) Representative: Reinhard - Skuhra - Weise & Partner

(56) References cited:
- US-A- 2 937 952
- US-A- 5 256 607
- US-A- 5 268 335

## Description

In recent years both governmental and private agencies have stressed the damage which can result when eyes are exposed to bright sunlight, this damage being caused primarily by exposure to wavelengths in the ultraviolet portion of the radiation spectrum. Therefore, glass manufacturers have been active in designing compositions for sunglasses which will essentially block the transmittance of ultraviolet radiation. United States Patents No. 5,256,607 and 5,268,335 present two disclosures directed to the production of such glasses.

The U.S. patent 5,268,335 also discloses a glass commercially marketed by Corning Incorporated, Corning, New York, which exhibits a neutral gray fixed tint and limits the trans-mittance of ultraviolet radiation at 380 nm to no more than 1% at a thickness of 2 mm. An analysis of that glass, marketed under Corning Code 8015, is tabulated below expressed in terms of weight percent on the oxide basis:

| | | | | | |
|---|---|---|---|---|---|
| SiO₂ | 68.41 | K₂O | 9.71 | Co₃O₄ | 0.021 |
| Al₂O₃ | 0.51 | ZnO | 6.76 | NiO | 0.126 |
| Na₂O | 8.81 | Fe₂O₃ | 5.54 | As₂O₃ | 0.111. |

There has been a need for a glass suitable for ophthalmic applications exhibiting a brown or green fixed tint of a desirable hue that can be chemically strengthened to high values with surface compression layers of significant depth, and which limits the transmittance of ultraviolet radiation at 380 nm to no more than 1% at a thickness of 2 mm.

Brown or green ophthalmic or other glasses which are chemically strengthenable are known in the art. Code 8079 glass, marketed by Corning Incorporated, is illustrative of such. An analysis thereof is set out below, expressed in terms of weight percent on the oxide basis.

| | | | | | |
|---|---|---|---|---|---|
| SiO₂ | 65.4 | CaO | 6.0 | NiO | 0.48 |
| Al₂O₃ | 7.0 | ZnO | 3.0 | V₂O₅ | 0.40 |
| Na₂O | 13.9 | TiO₂ | 0.25 | As₂O₃ | 0.10 |
| K₂O | 2.6 | Fe₂O₃ | 0.28 | Sb₂O₃ | 0.60 |

The brown color is imparted to the glass through a combination of a relatively high concentration of NiO with a low level of Fe₂O₃. Unfortunately, however, its transmittance of ultraviolet radiation at a wavelength of 380 nm is greater than 30%.

A fixed tint brown ophthalmic glass which absorbs strongly in the ultraviolet region of the radiation spectrum is marketed by Bausch and Lomb, Inc., Rochester, New York, under the designation B-15. That glass has the following approximate composition, expressed in terms of weight percent on the oxide basis:

| | | | | | |
|---|---|---|---|---|---|
| SiO₂ | 69.1 | K₂O | 9.8 | NiO | 0.11 |
| Al₂O₃ | 0.49 | ZnO | 6.1 | Se | 0.046 |
| Na₂O | 8.2 | Fe₂O₃ | 5.8 | As₂O₃ | 0.40 |

Because the strain point of that glass is so low, viz., about 435°C, it encounters problems in chemical strengthening in the standard commercial white crown glass salt bath; i.e., immersion for 2 to 16 hours in a bath of molten KNO₃ operating at a temperature of 450°C. For effective chemical strengthening brought about by exchanging potassium ions from the salt bath with sodium ions in the glass surface, the strain point of the glass must be higher than the temperature of the salt bath; in this instance higher than 450°C.

Also known are glasses displaying green colorations. For instance, in "Coloured Glasses", Dawson's of Pall Mall, (London, 1959), W. A. Weyl discusses the utility of the ions of chromium, cobalt, copper, vanadium, and praseodymium in producing green glasses and also examines the palette of colors, including greenish hues, which result from the combination of Fe⁺² and Fe⁺³ ions in the glass.

U.S. Patent 2,937,952 (Smith et al) discloses green glasses suitable for ophthalmic applications wherein the green coloration is imparted thereto through the inclusion of 2.8-5% Fe₂O₃. The patent noted that, although the total iron was reported as Fe₂O₃, the presence of both Fe⁺² and Fe⁺³ was acknowledged. The glasses consisted essentially, in weight percent, of

| | | | |
|---|---|---|---|
| SiO₂ | 65-75 | CaO | 5-8 |
| Na₂O | 7-10 | MgO | 2-4 |
| K₂O | 7-10 | CaO+MgO | 7-10.5 |
| Na₂O+K₂O | 15.5-17.5 | Fe₂O₃ | 2.8-5 |

Patent No. 5,268,335, supra, explained that the incorporation of substantial quantities of CaO in a glass composition has customarily been observed to retard the ion exchange taking place between potassium ions from a salt bath and sodium ions present in the glass surface. That action of Ca0 leads to a shallower depth of the surface compression layer even after relatively long exchange periods such that, whereas providing a very substantially initial improvement in mechanical strength, can result in a considerable reduction in strength as a consequence of surface abuse suffered by the glass during use in service. The glasses described by Smith et al. contain substantial levels of CaO.

Corning Code 8053 glass, marketed by Corning Incorporated, exhibits a green hue and absorbs very strongly in the ultraviolet portion of the radiation spectrum. Both the color and the ultraviolet absorption are primarily the result of the high level of iron present in the glass, which glass consists essentially, as analyzed in weight percent as expressed on the oxide basis, of

| | | | |
|---|---|---|---|
| SiO₂ | 67.0 | K₂O | 13.1 |
| B₂O₃ | 7.5 | ZnO | 2.5 |
| Al₂O₃ | 2.0 | TiO₂ | 1.0 |
| Na₂O | 2.4 | Fe₂O₃ | 5.1 |

Unfortunately, because the Na₂O content is low, the glass does not perform well when subjected to chemical strengthening in the standard commercial white crown glass salt bath; i.e., immersion for 2 to 16 hours in a bath of molten KNO₃ operating at a temperature of 450°C. Thus, there are insufficient Na⁺ ions in the glass surface to exchange with K⁺ ions from the salt bath so as to produce a surface compression layer of significant thickness.

Glass RB-3, marketed by Schott Glaswerk, Mainz, Germany, displays a green color and absorbs very strongly in the ultraviolet portion of the radiation spectrum. In like manner to Corning Code 8053 glass, supra, both the color and the ultraviolet absorption are due primarily to the high level of iron included in the glass composition, that composition consisting essentially, as analyzed in weight percent on the oxide basis, of

| | | | |
|---|---|---|---|
| SiO₂ | 72.6 | CaO | 4.4 |
| Al₂O₃ | 0.54 | As₂O₃ | 0.12 |
| Na₂O | 10.6 | Fe₂O₃ | 5.76 |
| K₂O | 6.0 | | |

That glass encounters problems in chemical strengthening on two counts. It contains a substantial amount of CaO and its strain point is below 450°C. The retarding effect which CaO exerts on the ion exchange reaction comprising the basis of chemical strengthening was explained above. To cause a compression surface layer to develop, the strain point of the glass must be higher than the temperature of the salt bath; in this instance, higher than 450°C. Otherwise, the bath temperature will cause the glass surface to relax such that compressive stresses are not built up therein.

Therefore, the principal objective of the present invention is to devise glass compositions suitable for ophthalmic applications which exhibit a brown or green fixed tint, which exhibit a transmittance to ultraviolet radiation at a wavelength of 380 nm of less than 1%, which will exhibit a transmittance having a dominant wavelength between 580-588 nm with a purity of 48-70% if brown, or transmittance at dominant wavelength between 554-564 with a purity of 18-32% if green, which exhibit a refractive index of 1.523, and which can be chemically strengthened.

### Summary of the Invention

That objective is achieved in transparent glasses of fixed brown or green tint, transmitting, at a thickness of 2 mm, less than 1% of ultraviolet radiation having a wevelength of 380 nm, and which, if the fixed tint is green are consisting essentially of

| | | | |
|---|---|---|---|
| SiO₂ | 65-72 | Na₂O+K₂O | 15-21 |
| B₂O₃ | 3-8 | CaO | 0-4 |
| Al₂O₃ | 0.5-5 | ZnO | 0-4 |
| Na₂O | 6-12 | CaO+ZnO | 1-5 |
| K₂O | 6-12 | Fe₂O₃ | 4.8-7 |

the fixed green tint being defined by the area bounded by apices A,C,D,E,A of the drawing, having a purity between 18 - 32%, and a dominant wavelength between 554 - 564 nm, and which, if the fixed tint is brown are consisting essentially of

| | | | |
|---|---|---|---|
| SiO₂ | 65-72 | CaO | 0-5.5 |
| B₂O₃ | 3-8 | ZnO | 0-4 |
| Na₂O | 6-10 | CaO+ZnO | 2-5.5 |
| K₂O | 7-12 | Fe₂O₃ | 3-5 |
| Na₂O+K₂O | 15-20 | Se | 0.02-2 |
| Al₂O₃ | 0-4 | NiO | 0-0.12 |

the fixed brown tint being defined by the area bounded by apices A',B',D',F',A' of the drawing, having a purity between 48 - 70%, and a dominant wavelength between 580-588 nm.

As employed herein, the expression "consisting essentially of" renders the glass composition open only for the inclusion of unspecified ingredients which do not materially affect the basic and novel characteristics of the glass. In general, the total of all such inclusions will be less than about 5%.

As was explained in U.S. Patent 5,268,335, optical and ophthalmic laboratories are under increasing pressure to reduce the concentration of zinc released in the effluent created by their finishing operations. Therefore, whereas ZnO may be substituted for part or all of the CaO, not only because of the above-described environmental concerns, but also because the redox conditions during melting require more exacting control with ZnO-containing glass melts, the preferred subject inventive glasses have compositions which are essentially free of ZnO. As used herein, "essentially free of ZnO" indicates that no substantial amount of a ZnO-containing material is intentionally included in the glass composition.

As was also explained in U.S. Patent No. 5,268,335, the presence of CaO in a glass composition has customarily been observed to retard the ion exchange taking place between potassium ions from a salt bath and sodium ions present in the glass surface. That action of CaO leads to a shallower depth of the surface compression layer even after relatively long exchange periods which, while providing a very substantial initial improvement in mechanical strength, can result in a considerable reduction in strength as a consequence of surface abuse suffered by the glass during use in service. Quite surprisingly, the substantial quantities of CaO in the inventive glasses do not appear to adversely affect their capability of being chemically strengthened, inasmuch as the phenomenon customarily encountered of the development of shallow compression layers has not been observed in the inventive glasses. It has been conjectured that the presence of B₂O₃ exerts some influence in securing surface compression layers of desirable depth.

When compared with Corning Code 8053 glass, the inventive green glasses resulted from the replacement of part of the K₂O with Na₂O, the substitution of CaO for ZnO, and the elimination of TiO₂ to obtain the desired green coloration. In general, the levels of Na₂O and K₂O will preferably be about equal.

With respect to Schott RB-3 glass, the inventive green glasses contain substantial amounts of B₂O₃ and the levels of the remaining components, particularly those of Na₂O and K₂O, are adjusted to assure that the strain points of the glasses exceed 460°C.

In discussing Corning Code 8079 glass above, it was observed that, whereas that glass exhibits a brown fixed tint and is chemically strengthenable, its transmittance of ultraviolet radiation is much too high in today's sunglass market. Glass B-15 of Bausch and Lomb was also discussed, it being pointed out that the reduction in ultraviolet transmission displayed by that glass involved the use of much higher levels of iron oxide than are found in Corning Code 8079 glass. When higher levels of iron oxide are utilized to achieve the desired color and absorption of ultraviolet radiation, the refractive index must be adjusted to 1.523 by removing either alkali metal oxides, alkaline earth metal oxides, and/or zinc oxide. When iron oxide replaces alkaline earth oxides and/or zinc oxide, the temperature of the strain point drops quite rapidly. As was observed above, for suitable ion exchange strengthening utilizing the replacement of sodium ions in the glass with potassium ions from the standard bath of molten KNO₃ operating at 450°C, the glass must demonstrate a strain point higher than 450°C. The subject inventive glasses exhibit strain points of at least 460°C.

When iron oxide was substituted for part of the alkali metal oxide content of Corning Code 8079 glass, glasses with strain points high enough for chemical strengthening were produced. That substitution, however, led to glasses that proved difficult to melt because of their high viscosities in the melting region. Because of anticipated melting and forming problems and the excessive volatilization of selenium due to the need for higher melting temperatures, that approach was abandoned.

The inventive brown glasses resulted from substantial additions of iron oxide, expressed as Fe₂O₃, in substitution for Al₂O₃, ZnO, and a minor reduction in CaO content, plus the inclusion of significant amounts of B₂O₃.

Arsenic oxide or a combination of alkali metal chloride and alkali metal bromide can comprise fining agents for the inventive green glasses. For example, As₂O₃ in concentrations up to about 0.5% or a combination of chloride and bromide up to about 1.5% total, consisting of up to 1% chloride and up to 0.5% bromide, has been found to be quite satisfactory for that purpose. As can be appreciated, the use of this latter combination yields a much more reduced glass. Accordingly, compensation for that factor must be made by adjusting the ratio of the iron oxide batch materials; e.g., adjusting the ratio of iron oxalate to iron (⁺3 valence) oxide batch materials.

Arsenic oxide or a combination of sodium chloride and sodium bromide can comprise fining agents for the inventive brown glasses. The use of this latter combination results in a much more reduced glass. Compensation for that circumstance can be made, however, by adjusting the ratio of the iron oxide batch materials; e.g., adjusting the ratio of iron oxalate to iron (+3 valence) oxide batch materials.

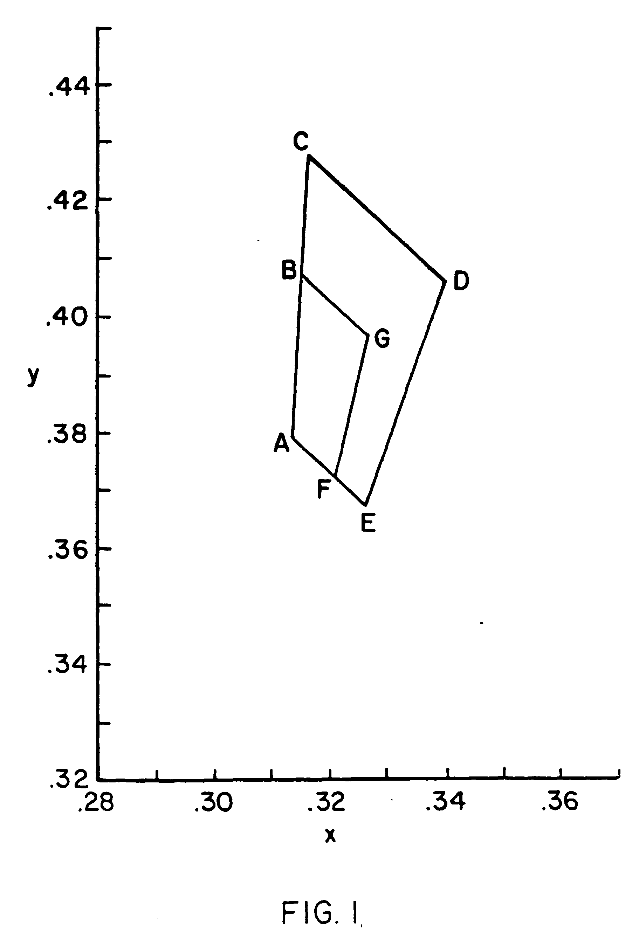

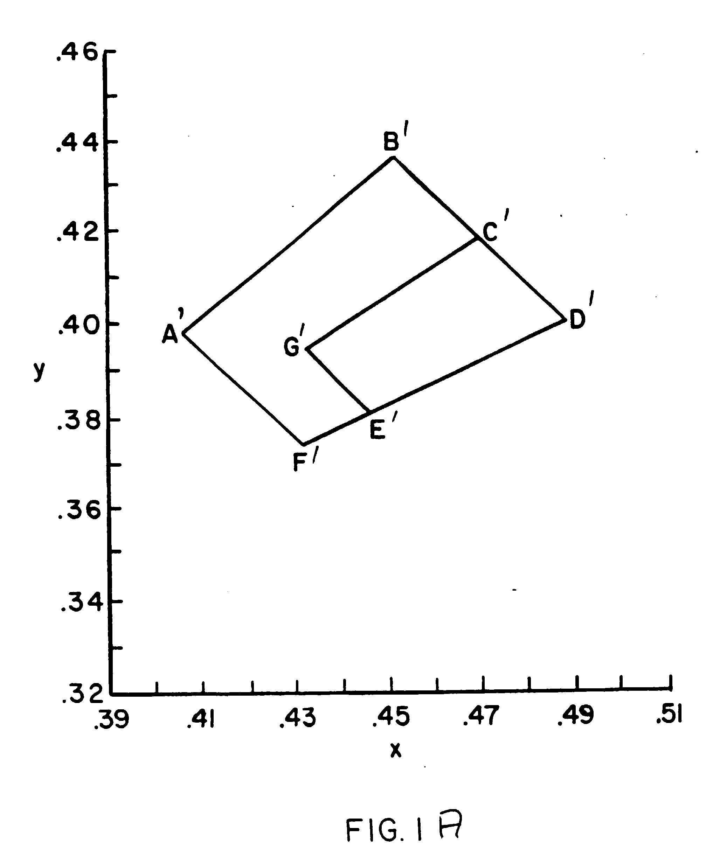

As was observed earlier, although the total iron content of the glass is reported in terms of Fe₂O₃, it is recognized that both Fe⁺² and Fe⁺³ ions are present in the glass. Consequently, when iron constitutes the glass colorant, the oxidation state of the glass must be controlled in order to secure a desired tint. Figure 1 in the appended drawings illustrates the "color box" of chromaticity coordinates (x,y), as determined employing a conventional tristimulus colorimeter with Illuminant C. Thus, the desired green tint lies within the area A,C,D,E,A of the drawing, with the preferred glasses exhibiting tints within the area A,B,G,F,A. As can be seen, in the basic glasses the dominant wavelength will range between 554-564 nm at a purity of 18-32%. In the preferred glasses the dominant wavelength will range between 554-560 nm at a purity of 18-26%.

The more preferred green glasses consist essentially, expressed in terms of weight percent on the oxide basis, of

| | | | |
|---|---|---|---|
| SiO₂ | 66-72 | K₂O | 6-11 |
| B₂O₃ | 3-7 | Na₂O+K₂O | 15-20 |
| Al₂O₃ | 0.5-4 | CaO | 1-4 |
| Na₂O | 6-11 | Fe₂O₃ | 5-7 |

As can be appreciated, Fe₂O₃ concentrations of 3% by weight and higher impart a distinct green coloration to the glass. To achieve the desired brown coloration, selenium in amounts up to 2% by weight are incorporated, the hue of which can be adjusted through the addition of nickel, expressed in terms of NiO. Figure 1A illustrates the "color box" of chromaticity coordinates (x,y), as D', E', G', C'. Accordingly, in the basic glasses the dominant wavelength will range between 580-588 nm at a purity of 48-70%. In the preferred glasses the dominant wavelength will range between 584-588 at a purity of 54-70%. In general, the level of K₂O in the glass will be held higher than that of Na₂O.

The most preferred brown glasses are essentially free of ZnO and consist essentially, expressed in terms of weight percent on the oxide basis, of

| | | | |
|---|---|---|---|
| SiO₂ | 66-71 | Al₂O₃ | 0.25-2 |
| B₂O₃ | 3-6 | CaO | 2.5-5 |
| Na₂O | 7-10 | Fe₂O₃ | 3-5 |
| K₂O | 8-11 | Se | 0.03-0.5 |
| Na₂O+K₂O | 16-20 | NiO | 0.01-0.1. |

### Brief Description of Appended Drawings

The appended drawings comprise plots of chromaticity coordinates on a color mixture diagram utilizing Illuminant C, for green glasses, Fig. 1, and brown glasses (Figure 1A).

### Description of Preferred Embodiments

Tables I and IA record several base glass compositions, expressed in terms of parts by weight on the oxide basis, illustrating the instant invention. Because, however, the sum of the individual components totals or closely approximates 100, for all practical purposes the values listed may be considered to reflect weight percent. The actual batch ingredients for preparing the glasses may comprise any materials, either oxides or other compounds, which, when melted together, will be converted into the desired oxide in the proper proportions. To illustrate, Na₂CO₃ and K₂CO₃ can comprise a source of Na₂O and K₂O, respectively.

The batch ingredients were compounded, thoroughly blended together to aid in obtaining a homogeneous melt, and charged into platinum crucibles. The crucibles were introduced into a furnace operating at about 1450°C, the batches melted for about 4 hours, the melts poured into steel molds to yield rectangular glass slabs having dimensions of about 25.4 X 10.2 X 1.3 cm (10" X 4" X 0.5"), and those slabs transferred immediately to an annealer operating at about 520°C.

Test samples were cut from the annealed slabs for measuring softening points, annealing points, strain points, linear coefficients of thermal expansion (25°-300°C), densities, and indices of refraction. Measurements of chromaticity and transmittance at a wavelength of 380 nm were carried out on ground and polished plates of 2 mm thickness.

Whereas the description above is directed to laboratory melting and forming practice only, it must be appreciated that the glass compositions reported in Table I falling within the ranges of the subject invention can be melted and formed in much larger quantities employing conventional commercial glass melting units with standard glass forming equipment and techniques. It is only necessary that glass batches of appropriate formulations be prepared, those batches fired at a temperature and for a time sufficient to secure homogeneous melts, and those melts thereafter cooled and shaped into glass articles of a desired configuration. Customarily, those glass articles will be annealed.

**TABLE I**

| (Green Glasses) | | | | | | | |
|---|---|---|---|---|---|---|---|
| | 1 | 2 | 3 | 4 | 5 | 6 | 7 |
| SiO₂ | 68.5 | 67.3 | 67.2 | 68.8 | 66.9 | 67.7 | 67.4 |
| B₂O₃ | 4.2 | 4.3 | 4.3 | 4.3 | 4.2 | 4.3 | 4.3 |
| Al₂O₃ | 2.2 | 1.9 | 1.9 | 0.5 | 1.9 | 1.9 | 1.9 |
| Na₂O | 8.7 | 8.8 | 8.7 | 8.7 | 8.7 | 8.8 | 8.8 |
| K₂O | 8.3 | 8.9 | 8.9 | 8.8 | 8.8 | 8.9 | 8.9 |
| CaO | 2.4 | 3.2 | 3.2 | 3.2 | 3.2 | 3.2 | 3.2 |
| Fe₂O₃ | 5.77 | 5.5 | 5.5 | 5.5 | 6.1 | 5.0 | 5.4 |
| TiO₂ | -- | -- | -- | 0.23 | -- | -- | -- |

**TABLE IA**

| (Brown Glasses) | | | | | |
|---|---|---|---|---|---|
| | 1a | 2a | 3a | 4a | 5a |
| SiO₂ | 69.1 | 69.3 | 68.7 | 68.7 | 68.7 |
| B₂O₃ | 4.2 | 4.3 | 4.3 | 4.3 | 4.3 |
| Al₂O₃ | 0.5 | 1.0 | 1.9 | 1.9 | 1.9 |
| Na₂O | 8.4 | 9.0 | 8.7 | 8.7 | 8.7 |
| K₂O | 9.9 | 8.9 | 8.8 | 8.9 | 8.8 |
| CaO | 4.0 | 3.2 | 3.2 | 3.2 | 3.2 |
| Fe₂O₃ | 4.0 | 3.9 | 3.9 | 3.9 | 3.9 |
| Se | 0.013 | 0.04 | 0.05 | 0.05 | 0.08 |
| NiO | 0.035 | 0.07 | -- | 0.07 | -- |
| TiO₂ | -- | -- | 0.15 | -- | -- |

As was noted above, the glasses of Table IA can be fined using either As₂O₃ or a combination of NaCl and NaBr in amounts of less than 1%.

The Tables II and IIA recite softening points (S.P.), annealing points (A.P.), and strain points (St.P), expressed in °C, linear coefficients of thermal expansion (Exp) over the temperature range 25°-300°C, expressed in terms of X 10⁻⁷/°C, densities (Den) in terms of g/cm³, refractive indices (n_{D}), percent transmittance (Tran) at a wavelength of 380 nm at a thickness of 2 mm, and chromaticity values (Y,x,y) measured on polished samples of 2 mm thickness, all being determined employing techniques conventional in the glass art. Example 1 and 1A comprised the base glass composition for a study of the effects which excursions of iron, selenium, and nickel contents would have on the chromaticity values exhibited by the glass. Accordingly, because the variations in levels of the base glass components were relatively minor, it was deemed that the physical properties of Examples 2-5 and 2a-5a, except for the chromaticity data, would be similar to those in Example 1 and 1A and, hence, were not measured.

**TABLE II**

| (Green Glasses) | | | | | | | |
|---|---|---|---|---|---|---|---|
| | 1 | 2 | 3 | 4 | 5 | 6 | 7 |
| S.P. | 703 | -- | -- | -- | -- | -- | -- |
| A.P. | 528 | -- | -- | -- | -- | -- | -- |
| St.P. | 494 | -- | -- | -- | -- | -- | -- |
| Exp | 85.7 | -- | -- | -- | -- | -- | -- |
| Den | 2.502 | -- | -- | -- | -- | -- | -- |
| n_{D} | 1.523 | -- | -- | -- | -- | -- | -- |
| Tran | 0.13 | 0.22 | 0.21 | 0.58 | 0.07 | 0.53 | 0.36 |
| Y | 16.4 | 13.7 | 15.5 | 18.7 | 10.1 | 22.5 | 19.0 |
| x | 0.3284 | 0.3176 | 0.3341 | 0.3164 | 0.3314 | 0.3214 | 0.3264 |
| y | 0.3811 | 0.3868 | 0.3978 | 0.3792 | 0.4021 | 0.3802 | 0.3860 |

In the "color box" of the appended drawing, apices A,B,C,D,E,F, and G designate the following x,y coordinates.

| | x | y |
|---|---|---|
| A | 0.3139 | 0.3791 |
| B | 0.3153 | 0.4073 |
| C | 0.3168 | 0.4278 |
| D | 0.3394 | 0.4061 |
| E | 0.3267 | 0.3668 |
| F | 0.3216 | 0.3718 |
| G | 0.3267 | 0.3965 |

As can be observed from the measurements reported in Table II and as graphically represented in the Figure 1, composition control of the inventive glasses is vital to assure that the glasses will demonstrate the chromaticities included within the polygon delineated by apices A,C,D,E,A, while limiting the transmittance of the galss at a wavelength of 380 nm to less than 1%. Even more critical, of course, is the control of glass composition within the preferred color target area bounded by apices A,B,G,F,A.

**TABLE IIA**

| (Brown Glasses) | | | | | |
|---|---|---|---|---|---|
| | 1 | 2 | 3 | 4 | 5 |
| S.P. | 705 | -- | -- | -- | -- |
| A.P. | 531 | -- | -- | -- | -- |
| St.P. | 492 | -- | -- | -- | -- |
| Exp | 89.5 | -- | -- | -- | -- |
| Den | 2.501 | -- | -- | -- | -- |
| n_{D} | 1.523 | -- | -- | -- | -- |
| Tran | 0.76 | 0.89 | 0.87 | 0.94 | 0.75 |
| Y | 14.9 | 11.7 | 17.9 | 13.1 | 15.1 |
| x | 0.4722 | 0.4289 | 0.4178 | 0.4087 | 0.4358 |
| y | 0.4008 | 0.4036 | 0.4029 | 0.4003 | 0.4055 |

In the "color box" of the appended drawing, Apices A', B', C', D', E', F', and G' designate the following x, y coordinates.

| | x | y |
|---|---|---|
| A' | 0.4075 | 0.3977 |
| B' | 0.4520 | 0.4353 |
| C' | 0.4703 | 0.4175 |
| D' | 0.4875 | 0.4002 |
| E' | 0.4467 | 0.3810 |
| F' | 0.4317 | 0.3748 |
| G' | 0.4352 | 0.3942 |

As can be observed from the measurements reported in Table II and as graphically represented in the appended drawing, composition control of the inventive glasses is vital to assure that the glasses will demonstrate the chromaticities included within the polygon delineated by Apices A', B', D', F', and A', while limiting the transmittance of the glass at a wavelength of 380 nm to less than 1%. Even more critical, of course, is composition control within the preferred color target area bounded by Apices C', D', E', G', and C'.

Ground and polished lenses having a thickness of about 2 mm were immersed for 16 hours in a bath of molten KNO₃ operating at 450°C. The lenses were extracted from the bath, the salt rinsed off in tap water, and dried. The samples were divided into two groups; the members of the first group being subjected to the American Optical tumbling procedure, the ophthalmic glass industry standard procedure for abrading lenses to simulate abuse during normal service, and the members of the second group not. Table III records whether the lens had been abraded prior to the test and the mean failure height (MFH) measured over a total of 25 samples of each glass, along with the standard deviation in the measurements (Std.Dev.). The test involved dropping a steel ball having a diameter of about 1.6 cm (0.625") onto the center of the sample.

**TABLE III**

| Example | | Abraded | MFH | Std.Dev |
|---|---|---|---|---|
| 1 | 2 hr | No | 6.64m (21.8') | 1.31m (4.3') |
| 1 | 2 hr | Yes | 3.66m (12.0') | 1.31m (4.3') |
| 1 | 16 hr | No | 6.93m (29.3') | 1.92m (6.3') |
| 1 | 16 hr | Yes | 4.69m (15.4') | 1.76m (2.5') |

**Table IIIA**

| Glass | Abraded | MFH | Std. Dev. |
|---|---|---|---|
| 1a | No | 10.42m (34.2') | 1.55m (5.1') |
| 1a | Yes | 3.96m (13.0') | 0.49m (1.6') |

It is immediately evident that the abraded strength evidenced by the chemically strengthened glasses of the present invention far exceeds the Federal Food and Drug Administration (FDA) "Drop Ball Test" requiring survival to a height of about 127 cm (50").

## Claims

1. Transparent glasses of fixed green or brown tint, transmitting at a thickness of 2 mm, less than 1% of ultraviolet radiation having a wavelength of 380 nm, and which, if the fixed tint is green, are consisting essentially of
| | | | |
|---|---|---|---|
| SiO₂ | 65-72 | Na₂O+K₂O | 15-21 |
| B₂O₃ | 3-8 | CaO | 0-4 |
| Al₂O₃ | 0.5-5 | ZnO | 0-4 |
| Na₂O | 6-12 | CaO+ZnO | 1-5 |
| K₂O | 6-12 | Fe₂O₃ | 4.8-7 |
the fixed green tint being defined by the area bounded by apices A,C,D,E,A of Figure 1 of the drawings, having a purity between 18-32%, and a dominant wavelength between 554 - 564 nm, and which, if the fixed tint is brown, are consisting essentially of
| | | | |
|---|---|---|---|
| SiO₂ | 65-72 | CaO | 0-5.5 |
| B₂O₃ | 3-8 | ZnO | 0-4 |
| Na₂O | 6-10 | CaO+ZnO | 2-5.5 |
| K₂O | 7-12 | Fe₂O₃ | 3-5 |
| Na₂O+K₂O | 15-20 | Se | 0.01-2 |
| Al₂O₃ | 0-4 | NiO | 0-0.12 |
the fixed brown tint being defined by the area bounded by apices A',B',D',F',A' of Figure 1A of the drawings, having a purity between 48 - 70%, and a dominant wavelength between 580-588 nm.

2. A transparent glass according to claim 1 of fixed green tint consisting essentially of
| | | | |
|---|---|---|---|
| SiO₂ | 66-72 | K₂O | 6-11 |
| B₂O₃ | 3-7 | Na₂O+K₂O | 15-20 |
| Al₂O₃ | 0.5-4 | CaO | 1-4 |
| Na₂O | 6-11 | Fe₂O₃ | 5-7 |
the fixed green tint bounded by apices A,B,G,F,A of Figure 1 of the drawings, a purity between 18-26%, and a dominant wavelength between 554-560 nm.

3. A transparent glass according to claim 1 of fixed brown tint consisting essentially of
| | | | |
|---|---|---|---|
| SiO₂ | 66-71 | Al₂O₃ | 0.25-2 |
| B₂O₃ | 3-6 | CaO | 2.5-5 |
| Na₂O | 7-10 | Fe₂O₃ | 3-5 |
| K₂O | 8-11 | Se | 0.03-0.5 |
| Na₂O+K₂O | 16-20 | NiO | 0.01-0.1, |
the fixed brown tint bounded by apices C',D',E',G',C' of Figures 1A of the drawings.

4. Transparent glass according to claim 1, 2 or 3 having a composition essentially free of ZnO.

## Patentansprüche

1. Transparente Gläser mit fester grüner oder brauner Färbung, die, bei einer Dicke von 2mm, weniger als 1% der Ultraviolettstrahlung mit einer Wellenlänge von 380nm durchlassen und die, wenn die feste Farbe grün ist, im wesentlichen bestehen aus
| | | | |
|---|---|---|---|
| SiO₂ | 65-72 | Na₂O+K₂O | 15 - 21 |
| B₂O₃ | 3-8 | CaO | 0 - 4 |
| Al₂O₃ | 0,5-5 | ZnO | 0 - 4 |
| Na₂O | 6-12 | CaO+ZnO | 1 - 5 |
| K₂O | 6-12 | Fe₂O₃ | 4,8 - 7 |
wobei die feste grüne Färbung durch den Bereich definiert ist, der durch die Spitzen A,C,D,E,A der Figur 1 der Zeichnungen umrissen ist, mit einer Reinheit von 18-32%, und einer Hauptwellenlänge von 554 - 564 nm, und die, wenn die feste Färbung braun ist, im wesentlichen wie folgt zusammengesetzt sind
| | | | |
|---|---|---|---|
| SiO₂ | 65-72 | CaO | 0 - 5,5 |
| B₂O₃ | 3-8 | ZnO | 0 - 4 |
| Na₂O | 6-10 | CaO+ZnO | 2 - 5,5 |
| K₂O | 7-12 | Fe₂O₃ | 3 - 5 |
| Na₂O+K₂O | 15-20 | Se | 0,01 - 2 |
| Al₂O₃ | 0-4 | NiO | 0 - 0,12 |
wobei die feste braune Färbung durch den Bereich definiert ist, der durch die Spitzen A',B',D',F',A' der Figur 1A der Zeichnungen umrissen ist, mit einer Reinheit von 48-70% und einer Hauptwellenlänge von 580-588nm.

2. Ein transparentes Glas nach Anspruch 1 mit fester grüner Färbung, bestehend im wesentlichen aus
| | | | |
|---|---|---|---|
| SiO₂ | 66 - 72 | K₂O | 6 - 11 |
| B₂O₃ | 3 - 7 | Na₂O+K₂O | 15 - 20 |
| Al₂O₃ | 0,5 - 4 | CaO | 1 - 4 |
| Na₂O | 6 - 11 | Fe₂O₃ | 5 - 7 |
wobei die feste grüne Färbung durch die Spitzen A,B,G,F,A der Figur 1 der Zeichnungen umrissen ist, eine Reinheit von 18-26% und eine Hauptwellenlänge von 554-560nm aufweist.

3. Ein transparentes Glas nach Anspruch 1 mit fester brauner Färbung, bestehend im wesentlichen aus
| | | | |
|---|---|---|---|
| SiO₂ | 66 - 71 | Al₂O₃ | 0,25 - 2 |
| B₂O₃ | 3 - 6 | CaO | 2,5 - 5 |
| Na₂O | 7 - 10 | Fe₂O₃ | 3 - 5 |
| K₂O | 8 - 11 | Se | 0,03 - 0,5 |
| Na₂O+K₂O | 16 - 20 | NiO | 0,01 - 0,1 |
wobei die feste braune Färbung durch die Spitzen C',D', E',G',C' der Figur 1A der Zeichnungen umrissen ist.

4. Transparentes Glas nach Anspruch 1, 2 oder 3 mit einer Zusammensetzung, die im wesentlichen kein ZnO enthält.

## Revendications

1. Verres transparents de teinte verte ou brune fixe, transmettant à une épaisseur de 2 mm, moins de 1 % d'un rayonnement ultraviolet ayant une longueur d'onde de 380 nm, et qui, si la teinte fixe est verte, consistent essentiellement en :
| | | | |
|---|---|---|---|
| SiO₂ | 65-72 | Na₂O+K₂O | 15-21 |
| B₂O₃ | 3-8 | CaO | 0-4 |
| Al₂O₃ | 0,5-5 | ZnO | 0-4 |
| Na₂O | 6-12 | CaO+ZnO | 1-5 |
| K₂O | 6-12 | Fe₂O₃ | 4,8-7 |
la teinte verte fixe étant définie par la zone délimitée par les sommets A,C,D,E,A de la figure 1 des dessins, ayant une pureté de 18 à 32 %, et une longueur d'onde prédominante de 554 à 564 nm, et qui si la teinte fixe est brune, consistent essentiellement, en :
| | | | |
|---|---|---|---|
| SiO₂ | 65-72 | CaO | 0-5,5 |
| B₂O₃ | 3-8 | ZnO | 0-4 |
| Na₂O | 6-10 | CaO+ZnO | 2-5,5 |
| K₂O | 6-12 | Fe₂O₃ | 3-5 |
| Na₂O+K₂O | 15-20 | Se | 0,01-2 |
| Al₂O₃ | 0-4 | NiO | 0-0,12 |
la teinte brune fixe étant définie par la zone délimitée par les sommets A',B',D',F',A' de la figure 1A des dessins, ayant une pureté de 48 à 70 %, et une longueur d'onde prédominante de 580 à 588 nm.

2. Verre transparent selon la revendication 1 de teinte verte fixe, consistant essentiellement en :
| | | | |
|---|---|---|---|
| SiO₂ | 66-72 | K₂O | 6-11 |
| B₂O₃ | 3-7 | Na₂O+K₂O | 15-20 |
| Al₂O₃ | 0,5-4 | CaO | 1-4 |
| Na₂O | 6-11 | Fe₂O₃ | 5-7 |
la teinte verte fixe étant délimitée par les sommets A,B,G,F,A de la figure 1 des dessins, avec une pureté de 18 à 26 % et une longueur d'onde prédominante de 554 à 560 nm.

3. Verre transparent selon la revendication 1 de teinte brune fixe, consistant essentiellement en :
| | | | |
|---|---|---|---|
| SiO₂ | 66-71 | Al₂O₃ | 0,25-2 |
| B₂O₃ | 3-6 | CaO | 2,5-5 |
| Na₂O | 7-10 | Fe₂O₃ | 3-5 |
| K₂O | 8-11 | Se | 0,03-0,5 |
| Na₂O+K₂O | 16-20 | NiO | 0,01-0,1 |
la teinte brune fixe étant délimitée par les sommets C',D',E',G',C' de la figure 1A des dessins.

4. Verre transparent selon la revendication 1, 2 ou 3 ayant une composition à peu prés exempte de ZnO.
